# EUROPÄISCHE PATENTSCHRIFT

(11) **EP 1 625 576 B1**
(45) Veröffentlichungstag und Bekanntmachung des Hinweises auf die Patenterteilung: **14.05.2008**
(21) Anmeldenummer: 04732951.1
(22) Anmeldetag: 14.05.2004
(51) Int. Cl.: G11B 7/09

(54) **VERFAHREN UND GERÄT ZUR EINSTELLUNG EINER VERSTÄRKUNG ZUR ERZEUGUNG EINES FOCUSFEHLERSIGNALS**
METHOD AND DEVICE FOR ADJUSTING AN AMPLIFICATION FOR PRODUCING A FOCUS ERROR SIGNAL
PROCEDES ET DISPOSITIF POUR AJUSTER UNE AMPLIFICATION POUR PRODUIRE UN SIGNAL D'ERREUR DE MISE AU POINT

(30) Priorität: 16.05.2003 DE 10322426
(43) Veröffentlichungstag der Anmeldung: 15.02.2006
(73) Patentinhaber: Thomson Licensing, 92100 Boulogne-Billancourt (FR)
(72) Erfinder: BÜCHLER, Christian, 78052 Villingen-Schwenningen (DE); HOFMANN, Holger, 72149 Neustetten (DE)
(74) Vertreter: Thies, Stephan
(86) Internationale Anmeldenummer: PCT/EP2004/005197
(87) Internationale Veröffentlichungsnummer: WO 2004/102546

(56) Entgegenhaltungen:
- EP-A- 1 017 052
- WO-A-02/17311
- US-B1- 6 407 968

## Beschreibung

Die Erfindung betrifft Steuerungsverfahren und Vorrichtungen für die Erzeugung eines Focusfehlersignals in Geräten zum Lesen und Beschreiben optischer Speichermedien, insbesondere die Einstellung von Verstärkungs- oder Gewichtungsfaktoren im Zuge der Steuerung. Das Dokument EP-A-1017052 offenbart eine Vorrichtung, gemäß die drei Strählen Verfahren zum Einstellen des Verstärkungstaktors in einem Gerät zum Leser und/oder Beschreiben Optischer Aufzeichnungsträger.

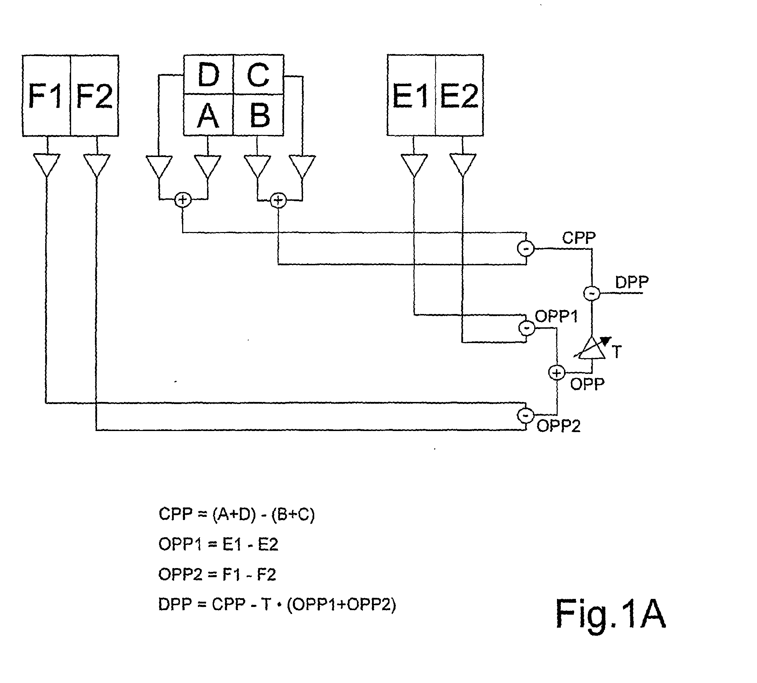

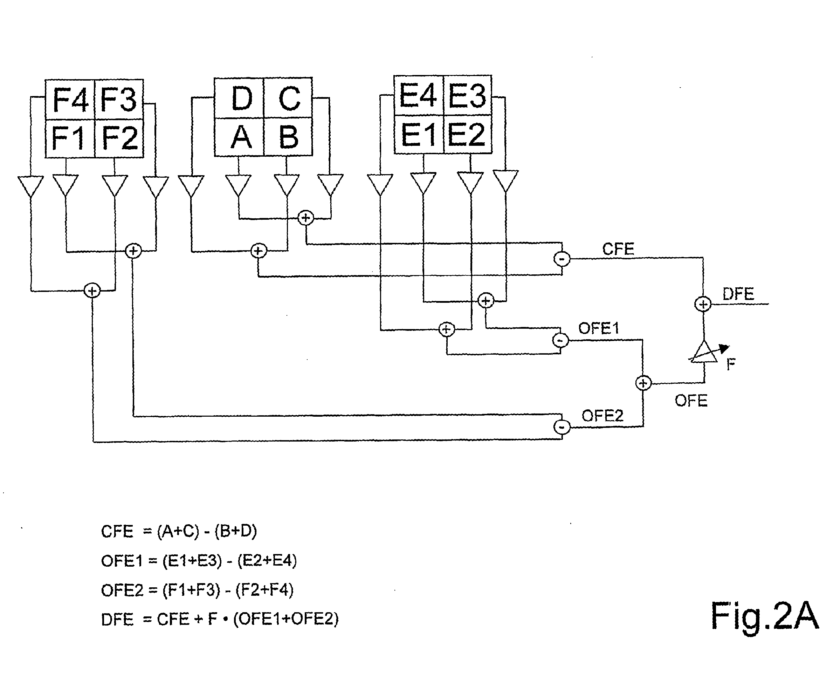

Eine der verbreiteten Methoden zur Bildung eines Spurfehlersignals ist die Differential Push-Pull Methode DPP. Die DPP-Methode ist eine Methode, die mit drei Strahlen das optische Speichermedium abtastet. Ziel der DPP-Methode ist es, mit den in Fig. 1A beispielhaft gezeigten Mitteln ein Spurfehlersignal DPP zu bilden, das keine Offsetabhängigkeit von der Position der Objektivlinse relativ zur optischen Achse des Abtasters hat. Ist der verwendete Photodetektor zusätzlich sowohl für den Hauptstrahl als auch für die Nebenstrahlen jeweils als Vierquadrantendetektor ausgeführt, kann sowohl für die Nebenstrahlen als auch für den Hauptstrahl ein Focusfehlersignal gebildet werden. Eine vorbekannte Methode zur Bildung eines verbesserten Focusfehlersignals addiert die Focusfehler-Signalanteile des Hauptstrahls und der Nebenstrahlen, wobei die Anteile der Nebenstrahlen entsprechend ihrer Intensitäten zum Hauptstrahl gewichtet werden. Diese Methode wird oft Differential Focus Methode oder Differential Astigmatism Method genannt. Fig. 2A zeigt das Blockschaltbild einer Anordnung zur Ermittlung eines Differential Focus Error Signals DFE nach der Differential Focus Methode.

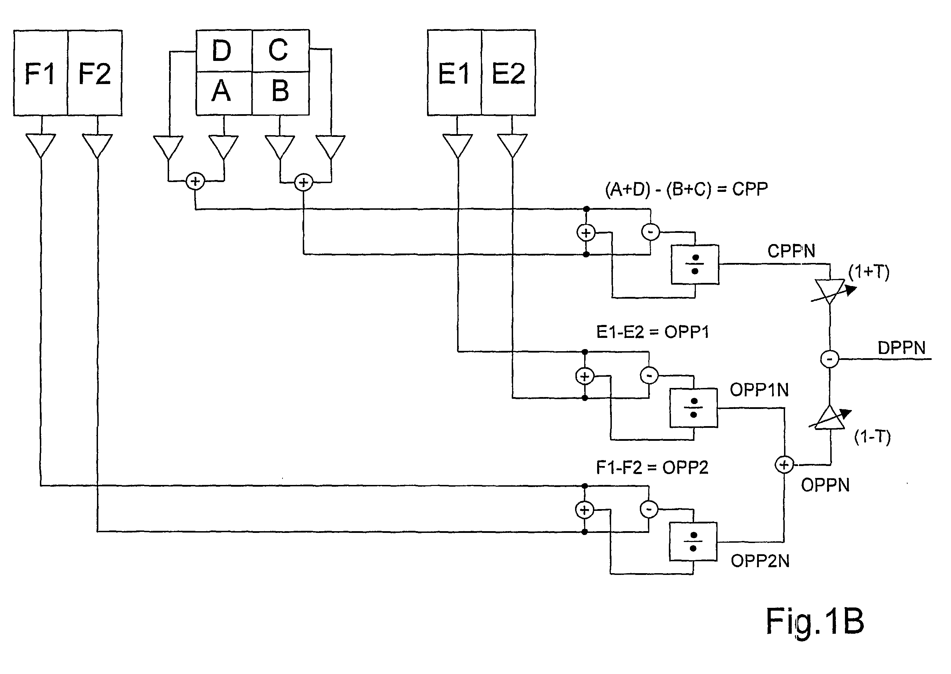

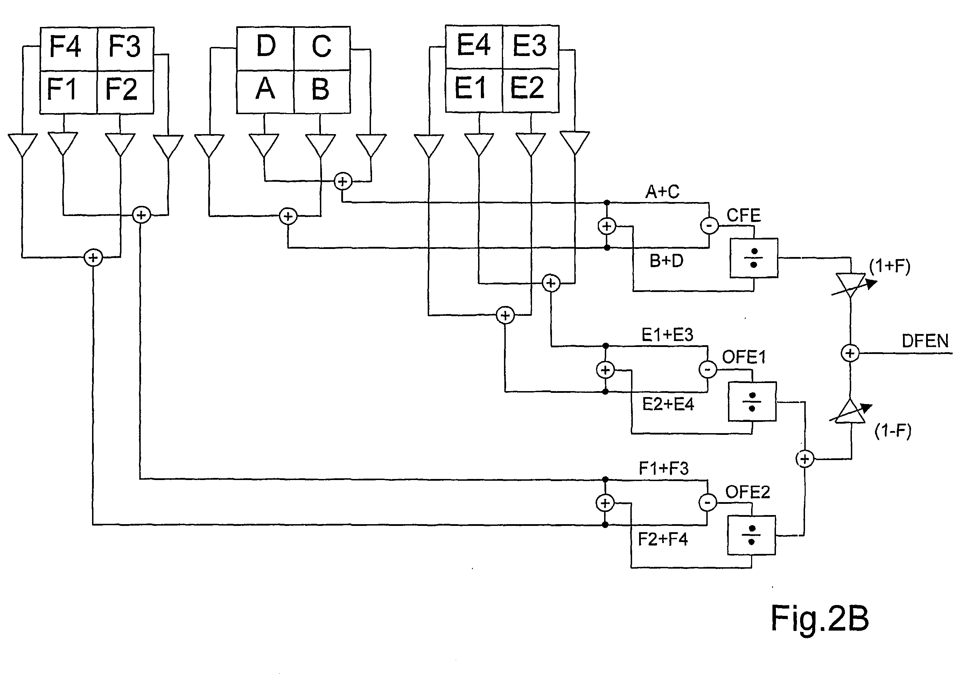

Vorteilhafterweise werden sowohl die Spurfehleranteile als auch die Focusfehleranteile des Hauptstrahls bzw. der Nebenstrahlen jeweils durch ihre Summe normiert. Dies ist in Fig. 1B für ein normiertes Differential Push-Pull Signal DPPN und in Fig. 2B für ein normiertes Differential Focus Error Signal DFEN gezeigt.
Unabhängig von der Normierung kann die Gewichtung zwischen Haupt- und Nebenstrahlfehlersignalen dabei in nur einem Signalzweig erfolgen, wie in Fig. 1A bzw. 2A mit den Gewichtungsfaktoren T bzw. F gezeigt; oder in beiden Signalzweigen wie in Fig. 1B bzw. 2B mit den Gewichtungsfaktoren 1+T, 1-T bzw. 1+F, 1-F gezeigt.

Im Folgenden soll nur noch auf die DFE-Methode eingegangen werden:

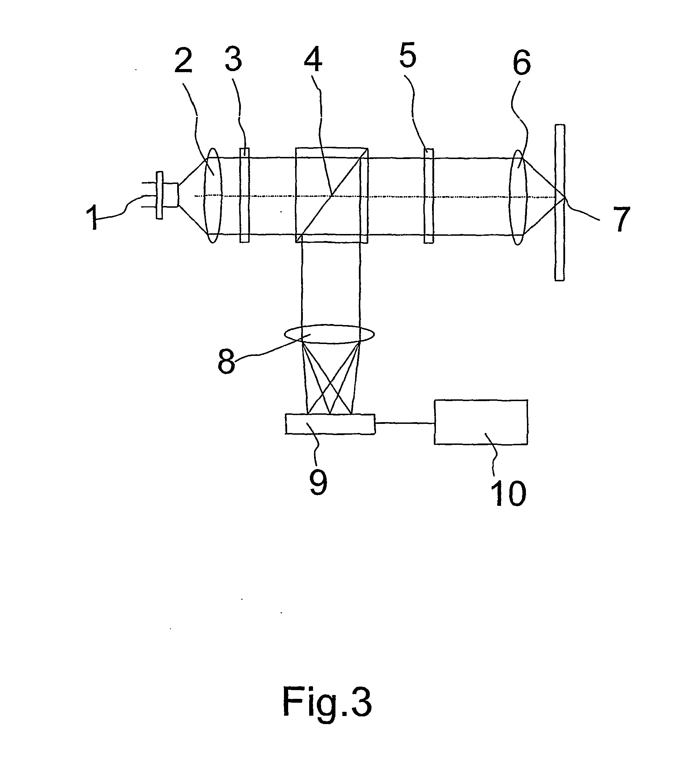

Der Abtaststrahl eines optischen Abtasters, siehe Fig. 3, besteht bei Anwendung der Differential Focus Methode aus drei Strahlen. Um diese Aufspaltung in drei Strahlen zu erreichen, wird in den Strahlengang der Lichtquelle 1 ein optisches Gitter 3 eingefügt. Der Hauptstrahl oder sog. Strahl nullter Ordnung, der die abzutastende Information einer Spur eines optischen Speichermediums liest, enthält üblicherweise den größten Teil, etwa 80-90%, der Lichtinformation. Die beiden Nebenstrahlen oder Strahlen +/-1. Ordnung enthalten jeweils die restlichen ca. 5-10% der Gesamtlichtintensität. Dabei wird vereinfachenderweise angenommen, dass die Lichtenergie der höheren Beugungsordnungen des Gitters Null sind.

Das optische Gitter wird so eingebaut, dass die Abbildung der beiden Nebenstrahlen bei auf Groove und Land beschriebenen Medien gerade die Mitte der Nebenspuren vom Typ L bzw. bei nur auf Groove G beschriebenen Medien gerade den Bereich zwischen zwei Spuren neben der vom Hauptstrahl gelesenen Spur vom Typ G treffen. Da die Nebenstrahlen und der Hauptstrahl optisch voneinander trennbar sein sollen, sind deren Abbildungen auf dem Speichermedium und auf dem Detektor in ihrer Position voneinander getrennt. Rotiert das Medium, so befindet sich einer der Nebenstrahlen in Leserichtung vor und der andere Nebenstrahl hinter dem Hauptabtaststrahl.

Die reflektierten Strahlen durchlaufen auf dem Rückweg zum Photodetektor ein astigmatisch wirkendes optisches Bauteil, z.B. eine Zylinderlinse. Nach der Zylinderlinse entstehen zwei in x und y Richtung gesehen voneinander unterschiedliche Focuspunkte. Aus jedem der Abtaststrahlen kann ein Focusfehler-Signal erzeugt werden, das von der Lage des Strahls relativ zu der von ihm abgetasteten Spur abhängt. Das Focusfehlersignal jedes Abtaststrahls enthält dabei hauptsächlich eine Komponente, die den vertikalen Abstand der Objektivlinse zur Informationsschicht des optischen Speichermediums wiedergibt. Zusätzlich enthalten ist eine Focus-Offset-Komponente, die unabhängig vom vertikalen Abstand ist, sondern vom Typ der jeweils abgetasteten Spur abhängt. Diese Focus-Offset-Komponente zeigt eine Abhängigkeit von der horizontalen Lage der Abtaststrahlen zu den Spuren. Die Amplitude dieser Offsetkomponente ist von der Geometrie der Spuren, beispielsweise beschrieben durch Spurbreite, Spurabstand, oder die Spurtiefe von G und L, abhängig.

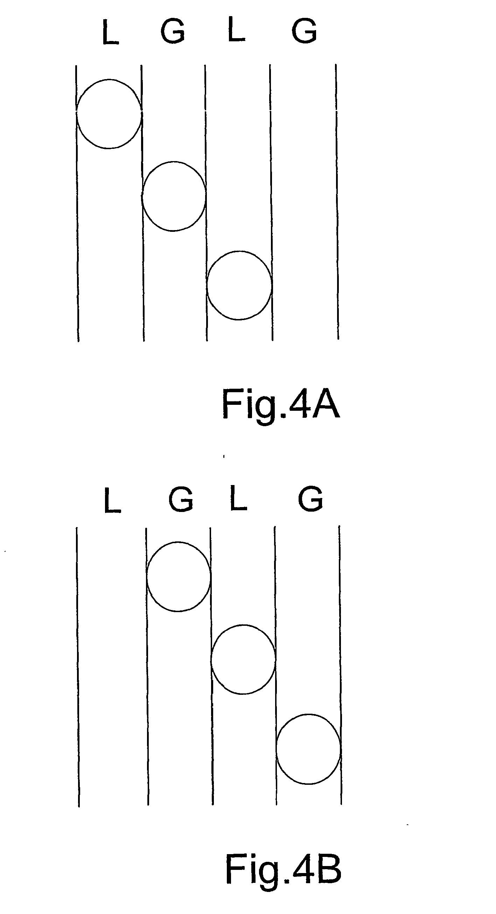

Wie oben bereits gesagt und in Fig. 4A gezeigt, wird das optische Gitter typischerweise so abgeglichen, dass die Neben-Abtaststrahlen gerade die Mitte einer Nebenspur L abtasten, wenn der Haupt-Abtaststrahl die Mitte einer Spur G erfasst. Wird die Objektivlinse gegenüber den Spuren des optischen Speichermediums verschoben, so wird der Haupt-Abtaststrahl beispielsweise so verschoben, dass er gerade die Mitte einer Nebenspur L abtastet. In diesem Fall liegen die Neben-Abtaststrahlen jeweils gerade auf der Mitte einer Spur G, wie in Fig. 4B gezeigt.
Die Neben-Abtaststrahlen haben demnach immer die komplementäre Spurlage zur Spurlage des Haupt-Abtaststrahls. Da die oben erwähnten Focusoffsetkomponenten des Haupt-Abtaststrahles und der Neben-Abtaststrahlen je nach Spurtyp ein zueinander unterschiedliches Vorzeichen haben, heben sich diese Focusoffsetkomponenten bei einer korrekten Gewichtung von Nebenstrahlfehlersignal zu Hauptstrahlfehlersignal in der Addition gerade auf, während sich die Focusfehlerkomponenten zueinander addieren.

Dies hat den Vorteil, dass beispielsweise bei der Abtastung eines sowohl auf G als auch auf L bespielten Mediums keine voneinander unterschiedlichen Focusoffsetwerte für das Lesen oder Beschreiben des jeweiligen Spurtyps eingestellt werden müssen. Ein weiterer Vorteil liegt darin, dass bei einem Spursprung der Focus-Offset der gekreuzten Spuren nicht unterschiedlich ist und somit beim Spurkreuzen kein mit der Spurkreuzungsfrequenz wechselnder Focusoffset von dem Focusregler ausgeglichen werden muss. Dies hat eine höhere Stabilität der Focusregelung während des Spursprungs zur Folge.

Voraussetzung dafür, dass sich die Focusoffsetkomponenten gerade gegenseitig aufheben, ist es, dass die Verstärkung, die das Gewicht der Hauptstrahlsignale zu dem Gewicht der Nebenstrahlsignale bestimmt, auf einen korrekten Wert eingestellt wird.

Aufgabe der Erfindung ist, Verfahren und Vorrichtungen zu beschreiben, welche die Gewichte so einstellen, dass sich bei der gewichteten Addition des Hauptstrahlsignals und des Nebenstrahlsignals die in diesen enthaltenen, von der horizontalen Lage zur Spur abhängigen Focusoffsetkomponenten aufheben.

Erfindungsgemäß wird ausgenutzt, dass bei einer Über- bzw. Untergewichtung des Hauptstrahlanteils gegenüber den Nebenstrahlanteilen das resultierende Differential Focus Error Signal DFE eine focusoffsetabhängige Komponente enthält, welche in Phase bzw. in Gegenphase mit einem Differential Focus Offset Signal DFO ist. Mit anderen Worten: Bei Vorliegen eines Spurkreuzvorgangs kann man aus der Phasenlage einer auftretenden focusoffsetabhängigen Komponente im DFE Signal, relativ zum DFO Signal, erkennen, ob die Gewichtung zu groß oder zu klein ist.

Erfindungsgemäß wird daher vorgeschlagen, zum Einstellen eines Gewichtungsfaktors in einem Gerät zum Lesen und/oder beschreiben optischer Aufzeichnungsträger, welches ein Focusfehlersignal DFE gemäß der differenziellen Focusfehlermethode erzeugt, den Focusregelkreis einzuschalten, das differenzielle Focusfehlersignal zu erzeugen, einen Spurkreuzvorgang auszulösen, das differenzielle Focusfehlersignal und ein Messsignal in Relation zu setzen, und den Gewichtungsfaktor in Abhängigkeit von dem in Relation gesetzten differenziellen Fokusfehlersignal zu ändern. Dies kann in vorteilhafter Weise durch digitale Signalverarbeitung oder durch einen digitalen Signalprozessor realisiert werden. Vorteilhaft sind die einfache Realisierung und der Ausgleich eventueller Änderungen der Eigenschaften eines erfindungsgemäßen Geräts, insbesondere des optischen Abtasters sowie des Focusregelkreises infolge Erwärmung oder anderer Einflüsse, auch während des Betriebs. Als Messsignal ist hier ein Signal zu verwenden, welches keinen Anteil des differenziellen Fokusfehlersignals DFE enthält und welches im Idealfall eines richtig eingestellten Gewichtungsfaktors nicht mit diesem korreliert ist. Aufgrund dieser Eigenschaften wird das Messsignal auch als Nullsignal bezeichnet. Liegt eine Korrelation vor, so ist dies ein Zeichen für einen unerwünschten Signalanteil, d.h. für Fehlabgleich der Gewichtung; was durch das in Relation setzen des differentiellen Fehlersignals und des Nullsignals festgestellt wird.

Eine erfindungsgemäße Abgleichmethode besteht auch darin, einen Spurkreuzvorgang auszulösen, und das Signal DFE als ein erstes Messsignal und ein zweites, unterschiedlich gebildetes Messsignal durch Multiplikation gemeinsam auszuwerten, wobei das zweite Messignal hier so beschaffen ist, dass es auf den Mitten von Groove G bzw. Land L seine Extrema aufweist. Die beiden Messsignale enthalten - in unterschiedlichen Anteilen - Aussagen über den Abstand der Objektivlinse vom Aufzeichnungsträger und über die radiale Lage der Strahlen relativ zu den Spuren. Am Ausgang des Multiplizierers entsteht als Ergebnis der Auswertung eine pulsierende Gleichspannung, deren Vorzeichen die Phase und deren Größe den Betrag des focusoffsetabhängigen Anteils im DFE-Signal repräsentiert. Gesteuert von diesem Ergebnis werden erfindungsgemäß die Gewichte eingestellt; dies erfolgt in schrittweiser, iterativer Annäherung an den korrekten Wert der Gewichtung, oder alternativ wird die nächste Gewichtungseinstellung auf der Basis einer Steigungsberechnung durchgeführt.

Der erfindungsgemäß erforderliche Spurkreuzvorgang wird erzeugt, indem bei eingeschaltetem Spurführungs-Regelkreis durch einen Steuerimpuls ein Spursprung ausgelöst wird.
Alternativ finden Spurkreuzvorgänge auch bei ausgeschaltetem Spurführungs-Regelkreis wegen der Exzentrizität des opt. Speichermediums statt.

In einer Ausprägung der Erfindung wird das zweite Messignal aus dem den Spurkreuzvorgang auslösenden Steuerungsimpuls ATON, GATE oder aus einem differentiellen Focus-offset-Signal DFO gebildet. Die gemeinsame Auswertung der Messsignale umfasst eine Integration des Produkts der beiden Messsignale zu einem Auswertesignal und danach dessen Vergleich mit einem Vergleichsintervall. Wenn das Auswertesignal nicht im Vergleichsintervall liegt, werden die Zweiggewichte T, F in mindestens einem Einstellungsschritt so verändert, dass das Auswertesignal sich auf das Vergleichsintervall hin verändert.

Mit anderen Worten: In Laufwerken für optische Speichermedien enthält ein durch gewichtete Addition aus Haupt- und Nebenstrahl-Focusfehlersignalen erzeugtes Focusfehlersignal immer dann einen unerwünschten Anteil des Spurfehlersignals, wenn die Gewichtungsfaktoren nicht genau auf die optischen und mechanischen Eigenschaften des konkret vorliegenden Laufwerks und Speichermediums abgestimmt sind. Die Erfindung beschreibt Verfahren, um die Gewichtungsfaktoren automatisch auf diese Eigenschaften abzustimmen. Die Verfahren sind zur Anwendung direkt nach dem Einlegen des Speichermediums geeignet, manche können auch während des Schreib- oder Lesebetriebs unterbrechungsfrei angewendet werden.

Die vorliegende Erfindung wird nachfolgend anhand bevorzugter Ausführungsbeispiele unter Bezugnahme auf die beigefügten Zeichnungen näher erläutert.
- Figur 1A: zeigt eine Anordnung des Standes der Technik zur Gewinnung eines Spurfehlersignals DPP nach dem Differential Push Pull Verfahren.
- Figur 1B: zeigt eine Anordnung zur Gewinnung eines normierten Spurfehlersignals DPPN mit Normierung und Gewichtung beider Teilsignale CPPN, OPPN.
- Figur 2A: zeigt eine Anordnung des Standes der Technik zur Gewinnung eines Differential Focus Error Signals DFE.
- Figur 2B: zeigt eine Anordnung zur Gewinnung eines normierten Differential Focus Error Signals DFEN mit Normierung und Gewichtung beider Teilsignale CFEN, OFEN.
- Figur 3: zeigt den Aufbau eines optischen Abtasters.
- Figur 4A: zeigt schematisch eine Anordnung aus Spuren und Abtaststrahlen, bei der der Haupt-Abtaststrahl auf die Mitte einer Spur G fällt.
- Figur 4B: zeigt schematisch eine Anordnung aus Spuren und Abtaststrahlen, bei der der Haupt-Abtaststrahl auf die Mitte einer Nebenspur L fällt.
- Figur 5: zeigt die Anordnung von Fig. 4A, zusammen mit Verläufen von bei radialer Bewegung auftretenden focusfehlerabhängigen Komponenten.
- Figur 6: zeigt die Anordnung von Fig. 4A, zusammen mit Verläufen der zur Ermittlung von DFE verwendeten Signale.
- Figur 7: zeigt eine Anordnung mit Strahlabstand Δn=3p/4, zusammen mit Verläufen der zur Ermittlung von DFE verwendeten Signale.
- Figur 8: zeigt eine Anordnung mit Strahlabstand Δn=p/2, zusammen mit Verläufen der zur Ermittlung von DFE verwendeten Signale.
- Figur 9: zeigt zeitliche Signalverläufe bei Anwendung einer ersten Abgleichmethode.
- Figur 10: zeigt das Blockschaltbild einer Anordnung zur Anwendung einer ersten Abgleichmethode.
- Figur 11: zeigt das Blockschaltbild einer weiteren Anordnung zur Anwendung einer Abgleichmethode.
- Figur 12: zeigt das Blockschaltbild einer weiteren Anordnung zur Anwendung einer Abgleichmethode.
- Figur 13: zeigt das Blockschaltbild einer Anordnung zur Gewinnung der Signale DFE, DFO aus den Signalen CFE, OFE.
- Figur 14: zeigt das Blockschaltbild einer weiteren Anordnung zur Gewinnung der Signale DFE, DFO aus den Signalen CFE, OFE.
- Figur 15: zeigt zeitliche Signalverläufe für aufeinanderfolgende einzelne Spursprünge bei verschieden eingestellter Gewichtung.
- Figur 16: zeigt das Blockschaltbild der zu den Signalverläufen von Fig. 15 gehörenden Anordnung.
- Figur 17: zeigt Signalverläufe für einen aus mehreren einzelnen Spursprüngen bestehenden Abgleichvorgang.
- Figur 18: zeigt Signalverläufe für Mehrspursprünge, die unterschiedlich viele Spuren überkreuzen.

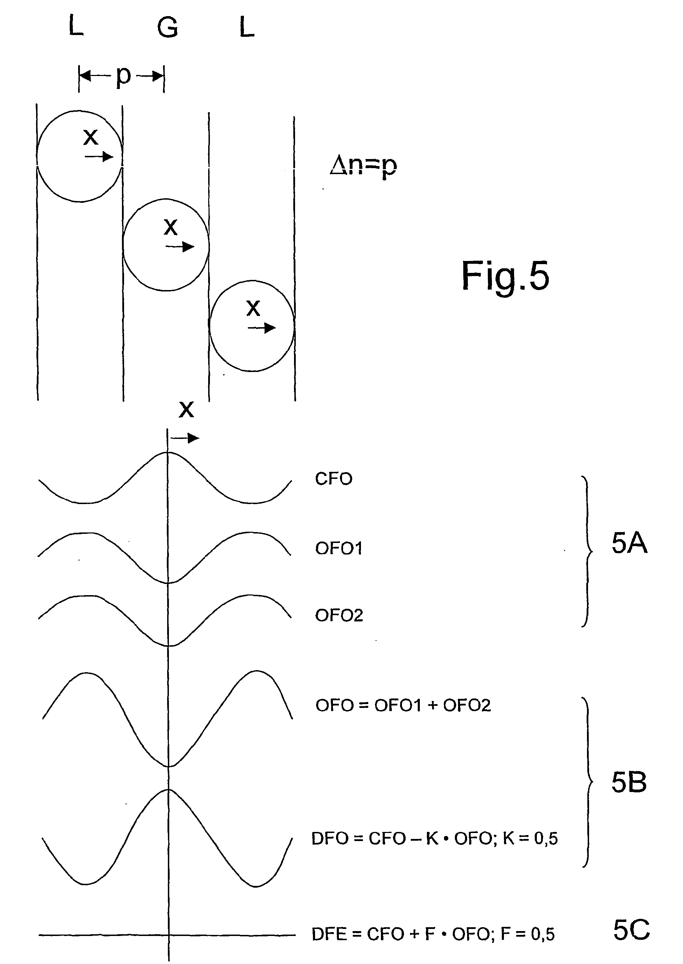

Wie bereits oben erwähnt, haben die Nebenstrahlen bei entsprechender Winkeleinstellung des opt. Gitters üblicherweise die komplementäre Spurlage zur Spurlage des Haupt-Abtaststrahls. Dies ist in Fig. 5A gezeigt. Wird die Objektivlinse in horizontaler Richtung x gegenüber den Spuren des optischen Speichermediums verschoben, so liegt der Haupt-Abtaststrahl beispielsweise zu einem bestimmten Zeitpunkt so, dass er gerade die Mitte einer Nebenspur vom Typ L abtastet. In diesem Fall liegen die Neben-Abtaststrahlen jeweils gerade auf der Mitte einer Spur vom Typ G. Auf den Haupt-Abtaststrahl wirkt zu diesem Zeitpunkt die für die Nebenspur L auftretende focusoffsetabhängige Komponente CFO, während für die Neben-Abtaststrahlen die für die Abtastspur G wirkende focusoffsetabhängige Komponente OFO1, OF02 wirkt. Zusätzlich wirkt auf alle drei Abtaststrahlen gleichermaßen eine focusfehlerabhängige Komponente, also eine Komponente in Abhängigkeit des vertikalen Abstandsfehlers. Diese ist in Fig. 5A-C nicht dargestellt, da hier nur die durch die horizontale Verschiebung der Abtaststrahlen hervorgerufenen focusoffsetabhängigen Komponenten sichtbar sind. Da die horizontale Spurlage der drei Strahlen sich nur gemeinsam ändern kann, ändern sich die Focusoffsetkomponenten gleichzeitig in Abhängigkeit der momentanen Spurlage.

Um die bei Verschiebung der Abtaststrahlen in horizontaler Richtung entstehenden Focusoffsetkomponenten zu erhalten, werden die einzelnen Nebenstrahlfehlersignale OFE1, OFE2 zunächst addiert und ergeben ein Nebenstrahlfehlersignal OFE, das die focusoffsetabhängige Komponente OFO der Neben-Abtaststrahlen enthält. Das Nebenstrahlfehlersignal OFE wird anschließend unter Anwendung einer vorbestimmbaren Gewichtung K vom Hauptstrahlfehlersignal CFE subtrahiert, wodurch ein Differential Focus Offset Signal DFO erzeugt wird.

Da die oben erwähnten Focusoffsetkomponenten je nach Spurtyp ein zueinander unterschiedliches Vorzeichen haben, während die Focusfehlerkomponenten zueinander gleichphasig sind, addieren sich bei korrekt eingestellter Gewichtung F die vom vertikalen Abstand der Objektivlinse zur Informationsschicht abhängigen Focusfehlerkomponenten im erzeugten Signal DFE, während sich die von der horizontalen Lage zur Spur abhängigen Focusoffsetkomponenten in der Summe gerade gegenseitig aufheben wie in Fig. 5C gezeigt. Das Signal DFO beinhaltet bei korrekter Gewichtung demnach nur noch die Focusoffsetkomponente, während im Signal DFE bei korrekter Gewichtung keine Focusoffsetkomponente mehr enthalten ist.

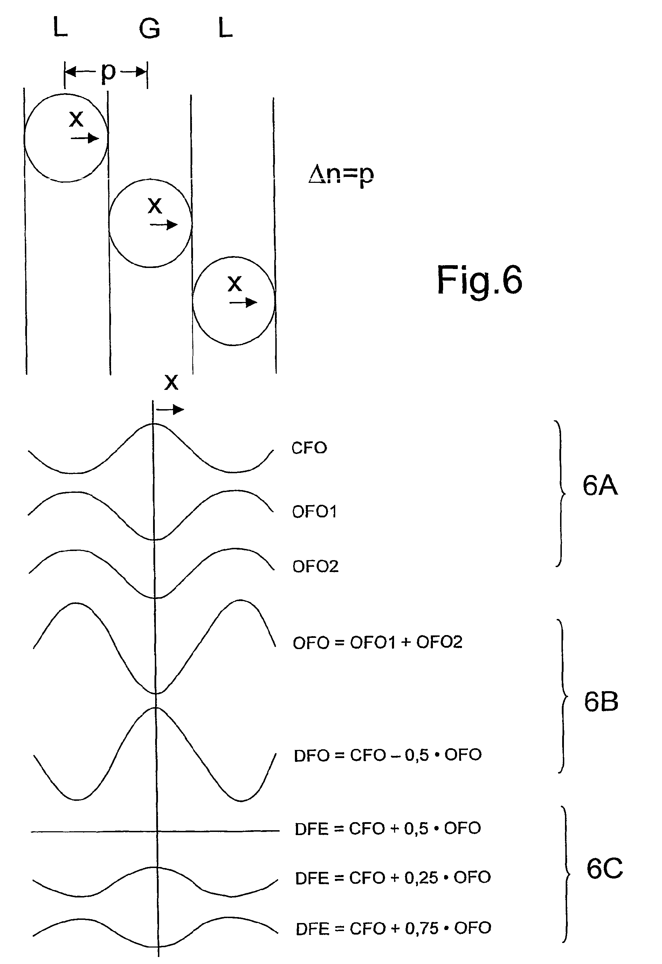

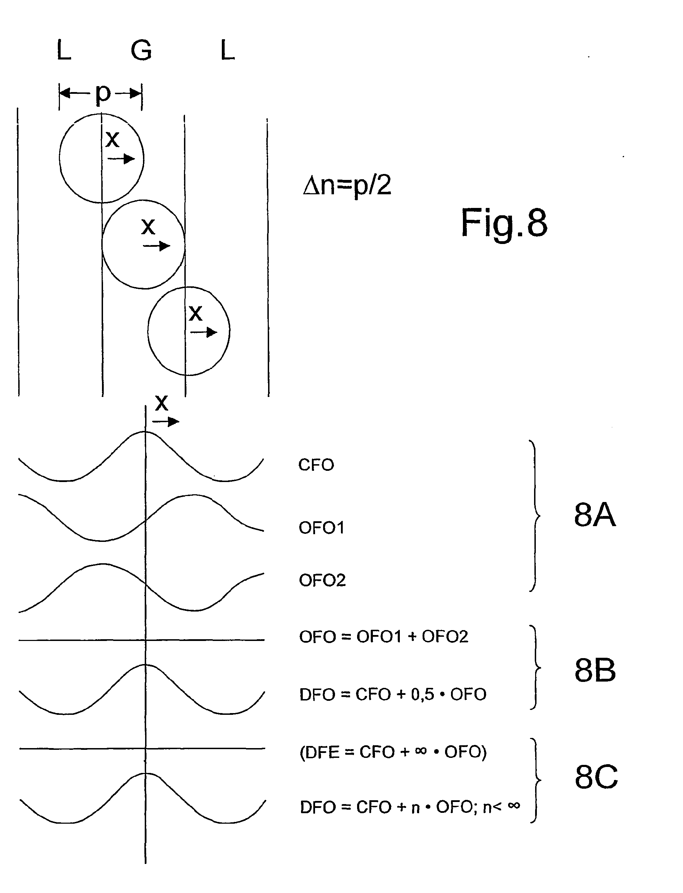

Üblicherweise wird der Strahlabstand Δn zwischen Haupt- und Nebenstrahlen, wie in Fig. 5 gezeigt, auf Δn=p eingestellt. Dabei ist p als Abstand zwischen der Mitte der Spur G und der Mitte der Nebenspur L definiert. Abweichend von dem üblichen Strahlabstand Δn=p zwischen Haupt- und Nebenstrahlen wie in Fig. 5A-C ist es möglich, den Abstand Δn in sinnvollen Grenzen zu variieren. Die Figuren 6A-6C, 7A-7C und 8A-8C zeigen die resultierenden focusoffsetabhängigen Komponenten DFO jeweils in den Figurteilen A und B sowie die Bildung des Focusfehlersignals DFE jeweils in den Figurteilen C, für verschiedene Strahlabstände Δn. Die theoretische Grenze des Werts für Δn liegt im Bereich von 0<Δn<2p, die praktisch verwendbare Grenze liegt im Bereich von p/2<Δn<3p/2, da sich die Phase der Nebenstrahlkomponenten OFO1 und OF02 bei Δn=p/2 und Δn=3p/2 so zueinander verschiebt, dass keine Komponente OFO mehr existiert (Fig. 8C) und sich somit die focusoffsetabhängige Komponente in DFE nicht mehr kompensieren lässt. Außerhalb dieser praktisch verwendbaren Grenze invertiert sich die Komponente OFO.

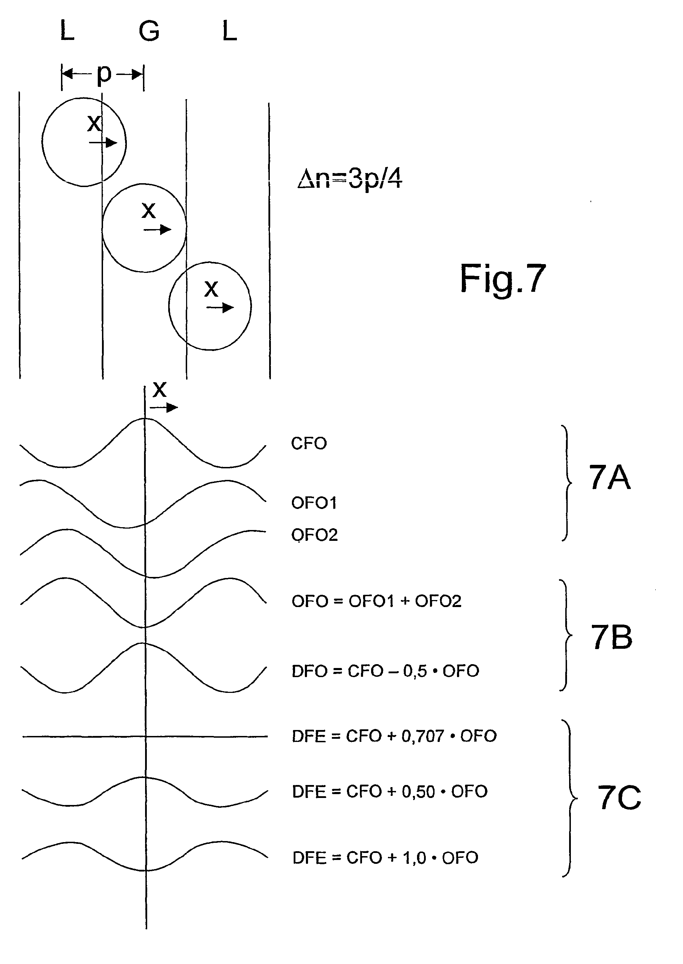

Die Figuren 6C und 7C zeigen, wie ein falsch eingestellter Gewichtungsfaktor F sich bei der Erzeugung des DFE-Signals in Abhängigkeit der Spurlage auswirkt. Dazu sind die Signalverläufe der einzelnen Signale in Abhängigkeit der Spurlage x gezeichnet. Typischerweise zeigen die focusoffsetabhängigen Anteile für den jeweiligen Abtaststrahl auf den jeweiligen Spurmitten von L oder G eine maximale Amplitude, während sie an den Grenzen zwischen G und L einen Nulldurchgang haben. Das Signal DFO erreicht bei Groove-Mitte seine größte positive Amplitude und bei Land-Mitte seine größte negative Amplitude.

Ist der Hauptstrahlanteil gegenüber den Nebenstrahlanteilen zu stark gewichtet, so enthält das resultierende Signal DFE eine focusoffsetabhängige Komponente, welche in Phase mit dem Signal DFO ist. Sind dagegen die Nebenstrahlanteile bezüglich dem Hauptstrahlanteil übergewichtet, so entsteht im Signal DFE eine focusoffsetabhängige Komponente, welche gegenphasig zu DFO ist. Um sicherzustellen, dass die focusoffsetabhängige Komponente im DFE-Signal nicht mehr enthalten ist, muss der Gewichtungsfaktor zwischen Hauptstrahlsignal und Nebenstrahlsignal korrekt eingestellt werden.

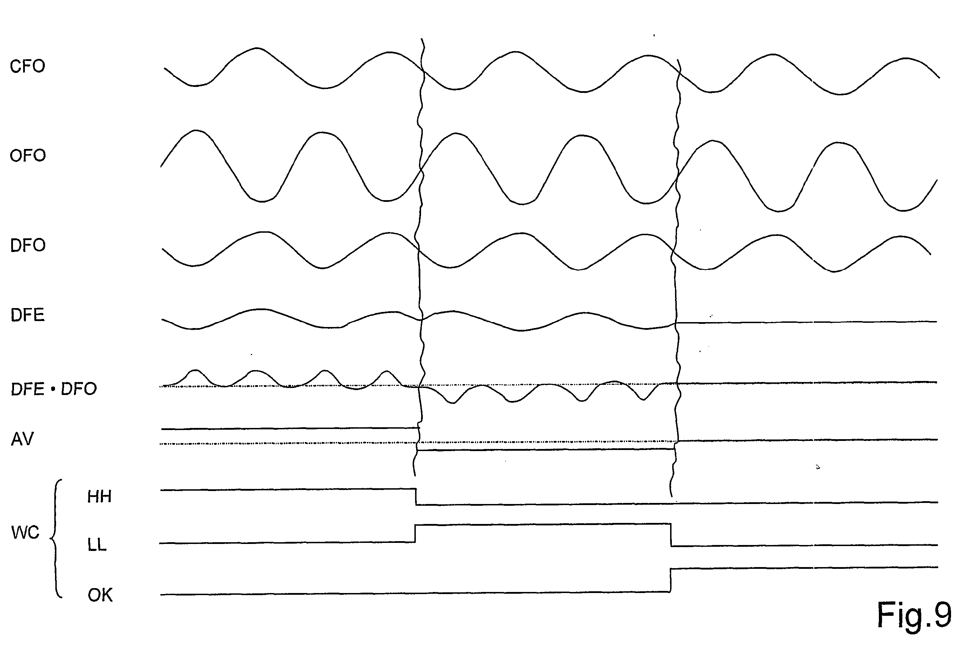

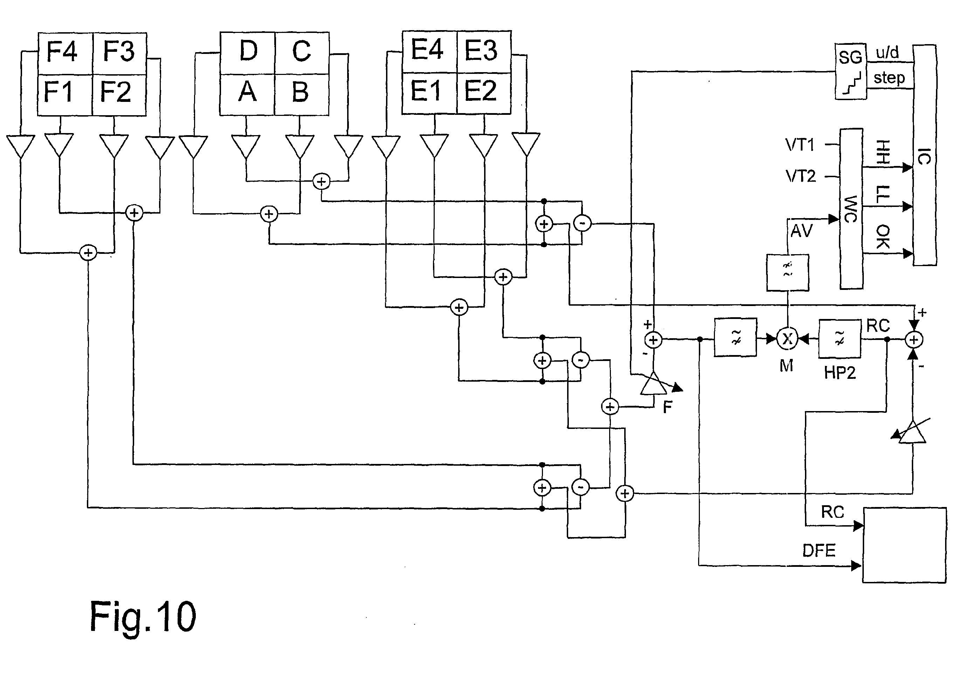

Zur Durchführung einer ersten Abgleichmethode ist es erforderlich, dass der Abtaststrahl sich relativ zu den Spuren bewegt, so dass die verschiedenen Spurlagen wie in Fig. 9 gezeichnet durchlaufen werden. Dies kann dadurch geschehen, dass der Focusregelkreis des Lese- bzw. Abspielgeräts aktiviert wird, und die focussierende Objektivlinse derart bewegt wird, dass eine Relativbewegung des Abtaststrahls relativ zu den Spuren erfolgt. Wegen der üblicherweise auftretenden Exzentrizität des opt. Speichermediums erfolgt eine Bewegung des Abtaststrahls relativ zu den Spuren bereits ohne eine Bewegung der Objektivlinse durch eine Ansteuerspannung. Die erste Abgleichmethode besteht darin, das Signal DFE als ein erstes Messsignal mit einem geeigneten zweiten Messsignal zu multiplizieren, welches beispielsweise auf Groove-Mitte seine größte positive Amplitude und bei Land-Mitte seine größte negative Amplitude aufweist, siehe Fig. 10. Auch ein invertiertes Verhalten eines solchen geeigneten Signals ist verwendbar.

So weist z.B. der AC-Anteil des Mirror-Signals oder des Radial Contrast-Signals RC ein solches geeignetes Verhalten auf. Das Radial Contrast-Signal RC wird gebildet, in dem die gewichtete Summe der Signale der durch den Hauptstrahl beleuchteten Detektoren A, B, C, D von der gewichteten Summe der Signale der durch die Nebenstrahlen beleuchteten Detektoren E1-E4, F1-F4 subtrahiert wird. Dabei beleuchten die Nebenstrahlen - wie bereits beschrieben - die jeweils komplementäre Spur zum Hauptstrahl. Besteht ein Kontrastunterschied zwischen Groove und Land, so entsteht ein Radial Contrast-Signal RC, dessen Wechselspannungsanteil die geeigneten Eigenschaften aufweist. Vor der Multiplikation M muss das RC-Signal daher eine AC-Kopplung HP2 durchlaufen. Besteht jedoch kein Kontrastunterschied zwischen Groove und Land, wie dies speziell bei unbespielten Medien der Fall sein kann, so entsteht kein geeignet verwendbares Signal zur Multiplikation mit dem DFE-Signal. Focusfehlersignal DFE und ein geignetes Spuhrfehlersignal RC werden in jedem Fall der Servokontrolleinheit SC zugeführt.

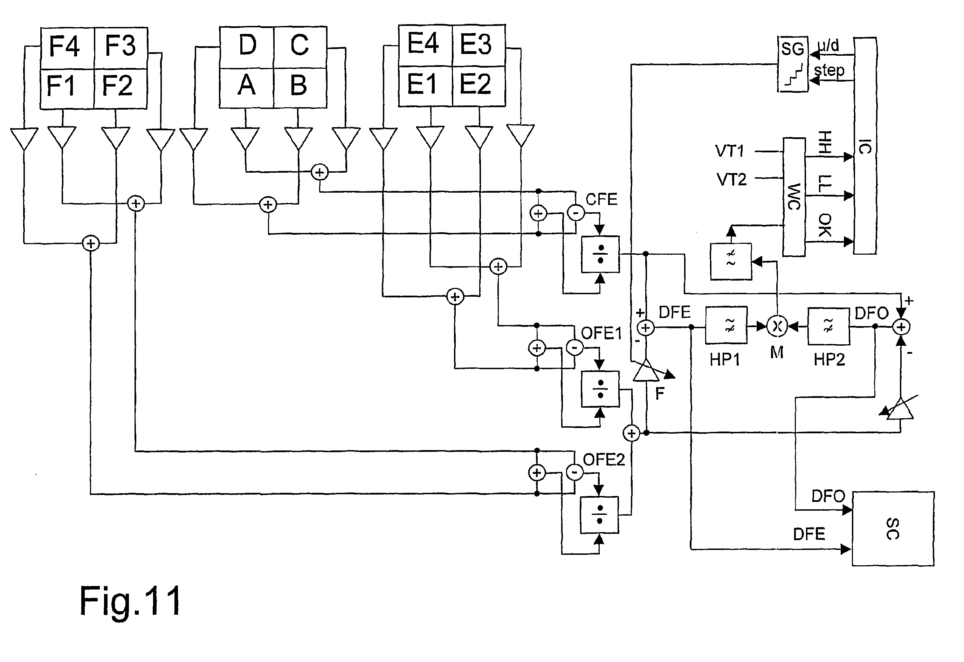

Ein Signal, welches auch ohne Kontrastunterschied zwischen Groove und Land einen geeigneten Verlauf aufweist, ist das oben beschriebene DFO-Signal. Aus diesem Grund ist vorteilhafterweise das DFO-Signal geeignet, um es als zweites Messsignal mit dem Signal DFE zu multiplizieren, siehe Fig. 11. Vorteilhafterweise werden die beiden Messsignale vor der gemeinsamen Auswertung durch Multiplikation M noch einer Hochpassfilterung HP1, HP2 unterzogen, um eventuelle DC-Anteile der Signale DFE und DFO zu unterdrücken. Am Ausgang des Multiplizierers M entsteht je nach eingestellter Gewichtung F als Ergebnis der Auswertung eine pulsierende Gleichspannung wie in Fig. 9 gezeigt, deren Vorzeichen die Phase und deren Mittelwert AV oder alternativ deren Spitzenwert den Betrag des focusoffsetabhängigen Anteils im DFE-Signal repräsentiert. Ziel ist es, die Gewichtung F so einzustellen, dass der Wert dieser pulsierenden Gleichspannung möglichst zu Null wird.

Dies wird beispielsweise, genau wie in Fig. 10, mittels eines Fensterkomparators WC festgestellt, dessen Vergleichsspannungen VT1, VT2 auf vorbestimmbare Werte eingestellt werden. Dabei sind diese Vergleichswerte VT1, VT2 gerade so klein zu wählen, dass die pulsierende Gleichspannung ausreichend klein und die damit einhergehende resultierende Einstellung der Gewichtung F innerhalb vorgegebener Grenzen in der Nähe der optimalen Gewichtung liegt. Wenn die Ausgänge des Fensterkomparators WC anzeigen, dass der Wert des Produkts innerhalb des Fensters liegt, siehe Ausgangssignal OK, so bedeutet dies, dass die korrekte Einstellung der Gewichtung F bereits gefunden wurde. Wenn der Wert unterhalb bzw. oberhalb des Fensters liegt, wie durch die Ausgangssignale LL bzw. HH angezeigt, so bedeutet dies, dass die Gewichtung F in Richtung auf einen größeren Hauptstrahlanteil bzw. Nebenstrahlanteil verstellt werden muss, siehe auch Fig. 9. Eine Steuerschaltung IC wertet nach jeder ganzen Schwingung des Signals DFO die momentanen Ausgangssignale HH, LL, OK des Fensterkomparators WC aus und steuert mit dem Stufengenerator SG im nächsten Schritt die Einstellung der Gewichtung F. Diese Einstellung kann, wie in Fig. 11 gezeigt, in schrittweiser Annäherung bzw. Iteration an den korrekten Wert der Gewichtung erfolgen. Alternativ kann eine Berechnung der nächsten Gewichtungseinstellung auf der Basis einer Steigungsberechnung erfolgen. Die Steuerschaltung IC wiederholt diese Abgleichschritte so lange, bis der Mittelwert (oder der Spitzenwert) des Produkts von DFE und DFO innerhalb des vorgegebenen Fensters liegt.

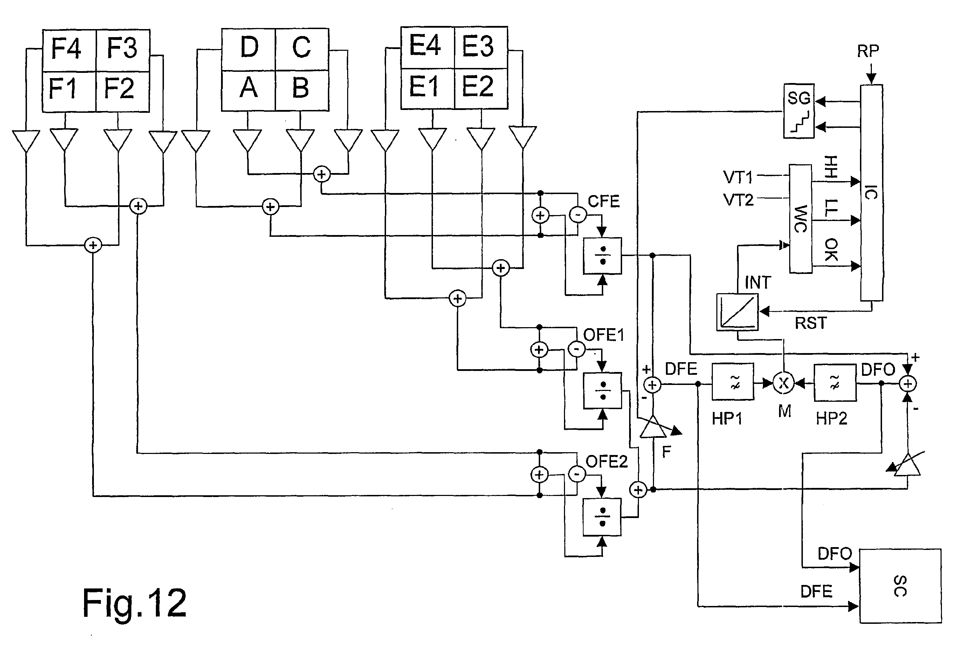

Eine weitere und besonders vorteilhafte Variante zur Einstellung des Gewichtungsfaktors wird im Folgenden anhand Fig. 12 beschrieben. Bei der Verwendung dieser Variante wird ebenfalls davon ausgegangen, dass der Focusregler bereits aktiviert ist und eine Relativbewegung des Abtaststrahls relativ zu den Spuren des optischen Speichermediums stattfindet. Auch hier wird ein Multiplizierer M verwendet, um das optional in der Einheit HP1 hochpassgefilterte DFE-Signal als erstes Messsignal mit dem ebenfalls optional in der Einheit HP2 hochpassgefilterten DFO-Signal als zweitem Messsignal zu multiplizieren. Im Zuge der gemeinsamen Auswertung wird dann das Ausgangssignal des Multiplizierers M mittels eines Integrators INT aufintegriert. Der Integrator besitzt einen Rücksetzeingang, der bei Ansteuerung bewirkt, dass die Integrationsspannung mit dem Wert Null beginnt. Das Ausgangssignal des Integrators wird wie oben beschrieben mit einem Fensterkomparator WC ausgewertet.

Eine Steuerschaltung IC wertet nach einer vorgegebenen Zeit die jeweiligen Ausgangssignale des Fensterkomparators WC aus und steuert entsprechend die Einstellung der Gewichtung F. Anschließend setzt die Steuerschaltung IC den Integrator INT mit dem Resetsignal RST auf Null, bevor ein neuer zeitgesteuerter Messzyklus beginnt. Innerhalb der durch ein Messzyklussignal RP vorgegebenen Zeit eines jeden Messzyklus wird eine größere Anzahl von Spurkreuzungen des Abtaststrahls zur Bildung des Produkts zwischen DFE und DFO berücksichtigt. Durch die mit dem Wert Null startende Integration entsteht nach der vorgegebenen Messzeit ein Integrationswert, der dem Durchschnittswert des Produkts von DFE und DFO und somit dem Fehler der Gewichtung entspricht.

Die Einstellung der Gewichtung kann, wie in Fig. 12 gezeigt, in schrittweiser Annäherung bzw. Iteration an den korrekten Wert erfolgen. Alternativ kann eine Berechnung der nächsten Gewichtungseinstellung auf der Basis einer Steigungsberechnung erfolgen. Die Steuerschaltung IC wiederholt diese Abgleichschritte so lange, bis der Integrationswert des Produkts von DFE und DFO innerhalb des vorgegebenen Fensters liegt.

Der Vorteil der zweiten Variante ist es, dass innerhalb der durch RP vorgegebenen Messzeit eine größere Anzahl von Spurkreuzungen des Abtaststrahls zur Bildung des Produkts zwischen DFE und DFO berücksichtigt wird. Eventuelle Rausch- oder Störkomponenten werden durch die Verwendung der Integration ausgemittelt.

Alternativ zur reinen Zeitsteuerung des Messzyklus kann der Messzyklus RP auch an die Umdrehung des optischen Speichermediums angepasst werden. So kann ein Messzyklus RP einen Bruchteil oder auch mehrere Umdrehungen des optischen Speichermediums andauern.

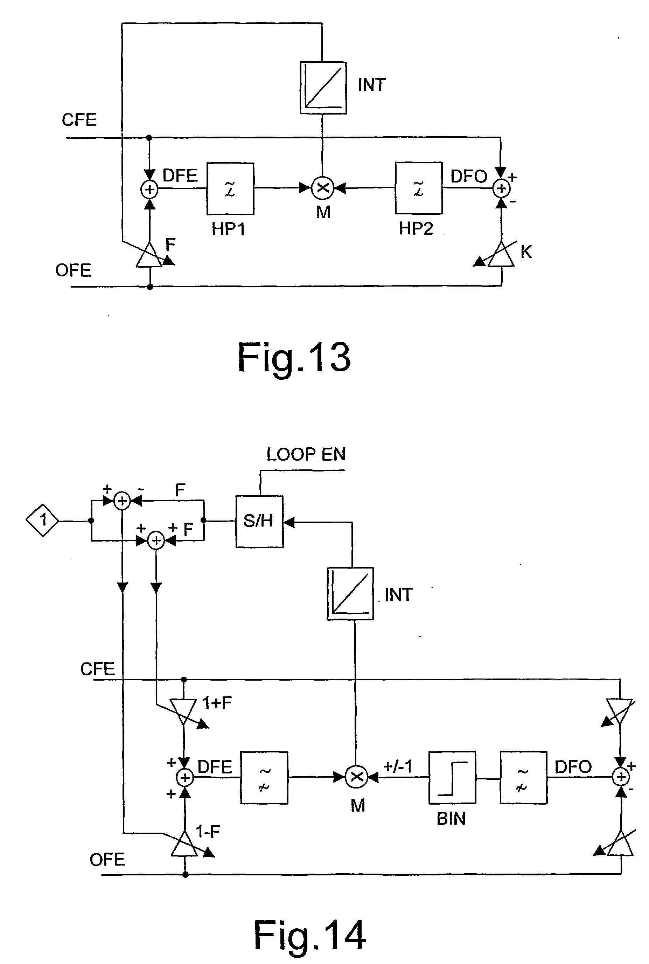

In einer dritten Variante, gezeigt in Fig. 13, wird wiederum ein Multiplizierer M verwendet, um das in HP1 optional hochpassgefilterte DFE-Signal als erstes Messsignal mit dem in HP2 ebenfalls optional hochpassgefilterten DFO-Signal als zweitem Messsignal als Teil der gemeinsamen Auswertung zu multiplizieren. Alternativ kann, wie in Fig. 14 gezeigt, das optional hochpassgefilterte DFO-Signal, welches typischerweise einen sinusförmigen Verlauf hat, vor der Multiplikation in einer Einheit BIN binärisiert werden, wobei die Ausgänge des Binärisierers BIN +1 oder -1 sind. Der Multiplizierer M multipliziert dann das DFE-Signal mit +1 oder -1, wodurch wiederum eine pulsierende Gleichspannung entsteht, deren Vorzeichen die Phase und deren Amplitude den Betrag des focusoffsetabhängigen Anteils im DFE-Signal repräsentiert. Als weiterer Teil der gemeinsamen Auswertung wird das Ausgangssignal des Multiplizierers M mittels eines Integrators INT aufintegriert, welcher seine Ausgangsspannung so lange ändert, bis der Wert der Multiplikation zu Null wird. Dies ist genau dann der Fall, wenn der optimale Gewichtungsfaktor erreicht ist. Verbindet man demnach die Ausgangsspannung des Integrators mittels einer Anpassschaltung mit der Gewichtungseinstellung, so entsteht eine Regelschleife, die sich wegen des Integrators INT im Rückkopplungszweig automatisch so einstellt, dass das Eingangssignal des Integrators INT zu Null wird. Dies ist genau dann der Fall, wenn die richtige Gewichtung F eingestellt ist und das Ausgangssignal des Multiplizierers M Null wird.

Besonders mit Hilfe der beiden letzten Varianten der beschriebenen ersten Abgleichmethode ist es möglich, den Gewichtungsfaktor F relativ genau zu ermitteln. Alle Varianten lassen sich in vorteilhafter Weise durch digitale Signalverarbeitung oder durch einen digitalen Signalprozessor realisieren. Voraussetzung zur Durchführung der angegebenen Abgleichmethode ist es, dass eine Relativbewegung des Abtaststrahls relativ zu den Spuren des optischen Speichermediums stattfindet, wobei der Spurregler typischerweise deaktiviert ist. In allen Varianten ließen sich, wie oben bereits erwähnt, statt des DFO-Signals auch beliebige andere Signale zur Multiplikation mit DFE verwenden, .vorausgesetzt sie weisen auf Groove-Mitte ihre größte positive Amplitude und bei Land-Mitte ihre größte negative Amplitude auf. Sofern ein Kontrast zwischen G und L besteht, könnten prinzipiell auch das AC-gekoppelte MirrorSignal oder das RC-Signal als zweites Messsignal verwendet werden.

Üblicherweise ist die Ermittlung des Gewichtungsfaktors entsprechend einer der oben beschriebenen Abgleichmethoden ein Bestandteil innerhalb eines Ablaufs von mehreren Abgleichschritten, die nach dem Einschalten eines Geräts zum Lesen oder Schreiben eines optischen Speichermediums durchgeführt werden. Diese Abgleichschritte werden durchgeführt, bevor beispielsweise ein Lese- oder Schreibvorgang gestartet wird.

Eine weitere Abgleichmethode, die auch während des Lese- bzw. Schreibbetriebs arbeitet, soll nachfolgend beschrieben werden. Die Abgleichmethode macht sich die Eigenschaft zunutze, dass ein Gerät zum Lesen oder Beschreiben eines optischen Speichermediums auch innerhalb des Lese- bzw. Schreibbetriebs zur Positionierung des optischen Abtasters Spursprünge über mindestens eine bis zu mehreren Spuren durchführt. Die Ermittlung der korrekten Gewichtung während des Lese- bzw. Schreibbetriebs ermöglicht es, eventuelle Änderungen der Eigenschaften des Geräts, insbesondere des optischen Abtasters sowie des Focusregelkreises infolge von Erwärmung oder anderer Einflüsse auch während des Betriebs auszugleichen.

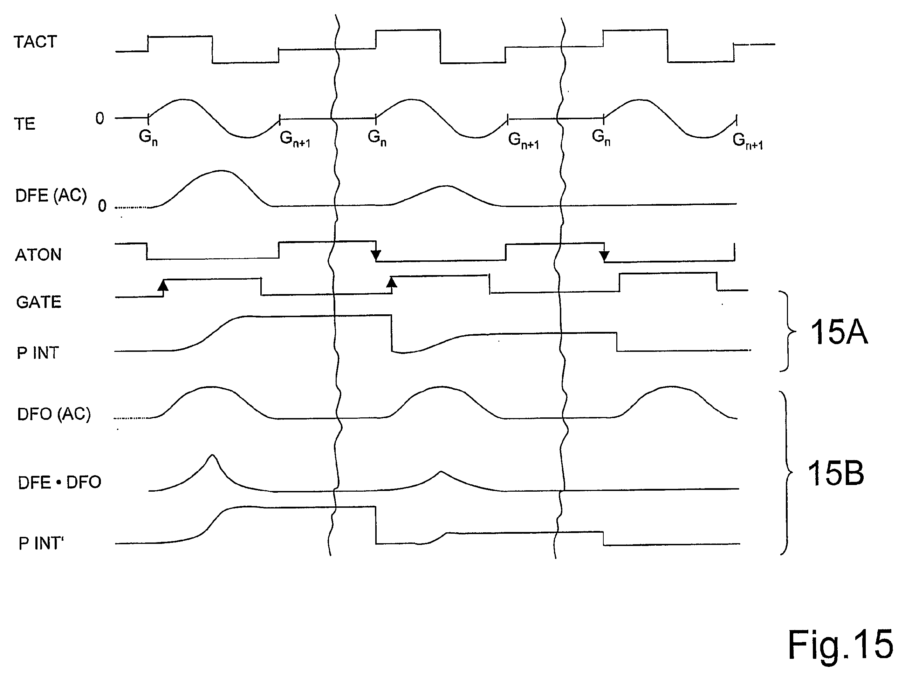

In Fig. 15 ist gezeigt, wie bei einem einzelnen Spursprung die durch Verrechnung der Photodetektorsignale entstehenden Hauptstrahl- und Nebenstrahl-Focusoffsetkomponenten CFO, OFO der Signale CFE und OFE sowie die resultierenden Signale DFE und DFO bei verschieden eingestellter Gewichtung für DFE aussehen, wenn sich die Abtaststrahlen um Δx von der Mitte einer Spur Gₙ auf eine Spur Gₙ₊₁ bewegen. Zusätzlich gezeichnet ist ein Signal TACT, das die zur Bewegung des Aktuators für einen Spursprung angelegte Spannung zeigt, sowie ein Spurfehlersignal TE. Ebenfalls ist ein Signal GATE sowie ein Signal ATON gezeichnet, wobei das Signal GATE die Auswertung des DFE-Signals kennzeichnet, während das Signal ATON die Zeitintervalle kennzeichnet, in denen Spursprünge stattfinden. Üblicherweise ist der durch GATE begrenzte Auswertungszeitraum kürzer oder gleich dem Zeitintervall, das durch ATON beschrieben wird. Ein Signal PINT wie in Fig. 15A gezeigt wird durch Integration des DFE-Signals gebildet, wobei der Integrator zur Bildung des Signals PINT ebenfalls durch das GATE-Signal gesteuert wird.

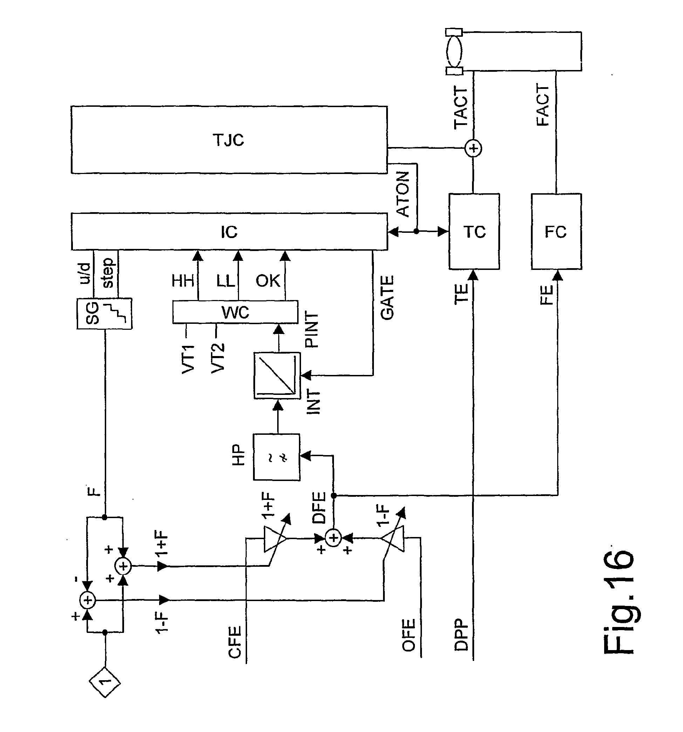

Eine beispielhafte Anordnung entsprechend des beschriebenen Ablaufs zeigt Fig. 16. Vor Beginn eines Spursprungs sind sowohl Focusregler FC als auch Spurregler TC aktiv. Zu Beginn eines Spursprungs deaktiviert die Spursprung-Kontrolleinheit TJC mittels des Signals ATON den Spurregler TC und erzeugt das Signal TACT so, dass der Aktuator einen Spursprung um genau eine Spur durchführt. Das Auswertesignal PINT wird aus dem Signal DFE als erstem Messsignal durch Integration INT gewonnen, wobei die Integratorspannung nach Freigabe durch das hier als zweites Messsignal fungierende Signal GATE mit Null startet. Wegen des aktivierten Focusreglers FC ist der Anfangswert des Signals DFE vor dem Spursprung üblicherweise nahe Null. Vorteilhafterweise kann das Signal DFE vor der Integration noch in der Einheit HP AC-gekoppelt werden.

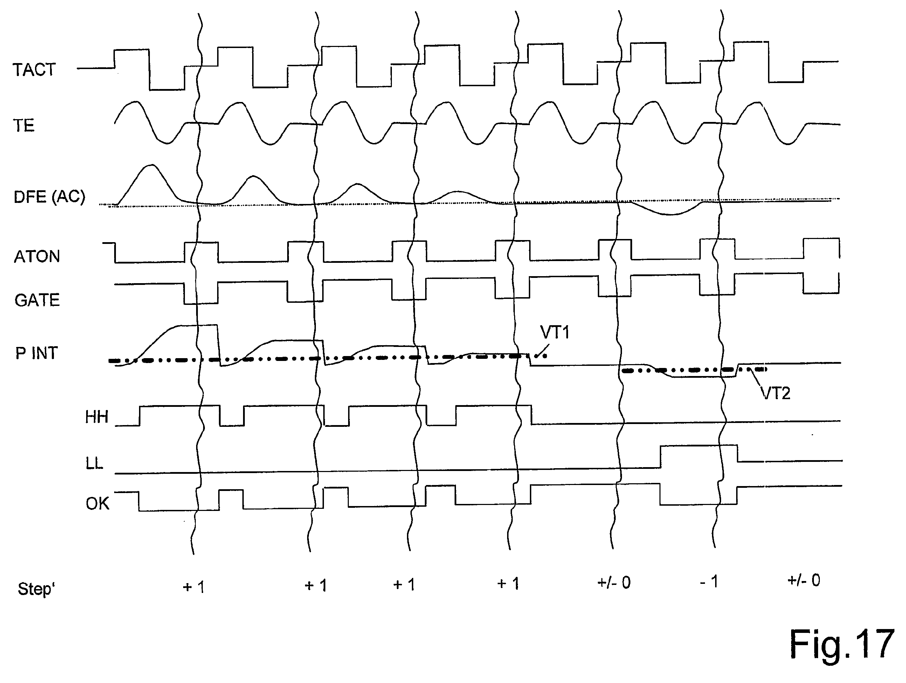

Ist der Hauptstrahlanteil gegenüber den Nebenstrahlanteilen zu stark gewichtet, so enthält das resultierende Signal DFE eine focusoffsetabhängige Komponente, welche einen Signalverlauf mit positiver Polarität erzeugt. Sind dagegen die Nebenstrahlanteile bezüglich dem Hauptstrahlanteil übergewichtet, so entsteht im Signal DFE eine focusoffsetabhängige Komponente, welche einen Signalverlauf mit negativer Polarität erzeugt. Ist die korrekte Gewichtung F eingestellt, so ist die im DFE-Signal enthaltene focusoffsetabhängige Komponente Null. Entsprechend der Amplitude und der Polarität der im DFE-Signal enthaltenen focusoffsetabhängigen Komponenten wird das Signal PINT am Ende des durch GATE vorgegebenen Zeitintervalls einen positiven oder negativen Endwert erreichen, sofern die Gewichtung falsch eingestellt ist. Die Ausgangsspannung PINT des Integrators wird dann Null, wenn die korrekte Gewichtung eingestellt ist, wie es in Fig. 17 dargestellt ist.

Die Ausgangsspannung PINT des Integrators wird beispielsweise mittels eines Fensterkomparators WC ausgewertet, dessen Vergleichsspannungen VT1, VT2 auf vorbestimmbare Werte eingestellt werden. Dabei sind diese Vergleichsspannungen gerade so klein zu wählen, dass der Wert PINT des Integrators ausreichend klein und die damit einhergehende resultierende Einstellung der Gewichtung F innerhalb vorgegebener Grenzen in der Nähe der optimalen Einstellung liegt. Die Ausgänge des Fensterkomparators WC zeigen an, ob die korrekte Einstellung der Gewichtung bereits gefunden wurde, oder ob eine Verstellung der Gewichtung auf den Hauptstrahlanteil oder auf den Nebenstrahlanteil notwendig ist. Eine Steuerschaltung IC wertet nach einem vollständig ausgeführten Spursprung die momentanen Ausgangssignale des Fensterkomparators aus und steuert entsprechend die Einstellung der Gewichtung F. Diese Einstellung kann in schrittweiser Annäherung bzw. Iteration an den korrekten Wert der Gewichtung erfolgen. Alternativ kann eine Berechnung der nächsten Gewichtungseinstellung auf der Basis einer Steigungsberechnung erfolgen. Die Steuerschaltung IC wertet aufeinanderfolgende Spursprünge aus und führt die schrittweise Einstellung der Gewichtung F so lange durch, bis das Ausgangssignal PINT des Integrators innerhalb des vorgegebenen Fensters liegt.

Alternativ zu der durch das Signal GATE gesteuerten Integration des DFE-Signals ist es möglich, wie in Fig. 15B gezeigt das DFE-Signal als erstes Messsignal zunächst mit dem DFO-Signal als zweitem Messsignal zu multiplizieren und das entstehende Produkt im Zuge der Auswertung zu integrieren. Dies hat den Vorteil, dass die focusoffsetabhängigen Komponenten im DFE-Signal durch den Signalverlauf des DFO-Signals stärker gewichtet werden. Das Signal PINT' ist weiter zu behandeln wie oben beschrieben.

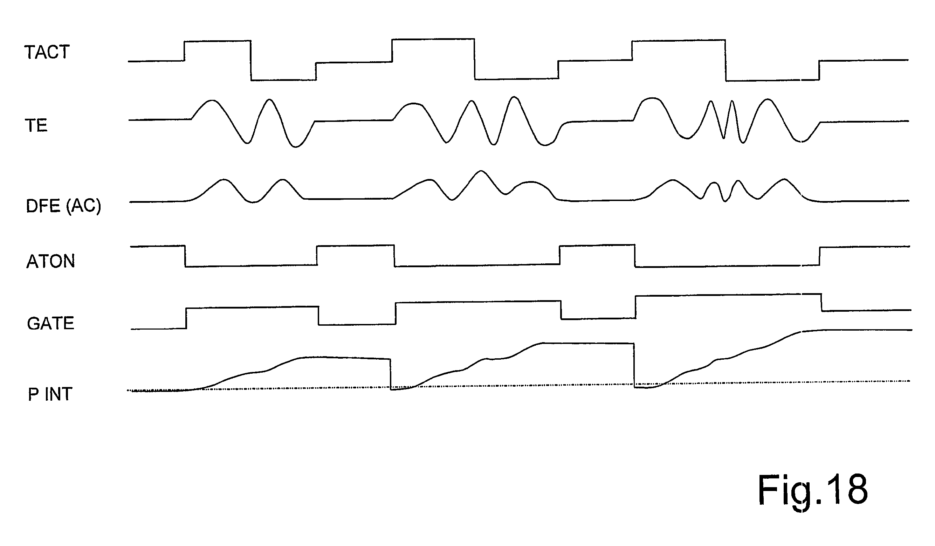

Das in Fig. 18 dargestellte Diagramm zeigt, dass statt eines Einzelspursprungs auch ein Mehrspursprung zur Ermittlung der Einstellung der Gewichtung verwendet werden kann. Es ist jedoch die Vergleichsspannung des Fensterkomparators entsprechend der Anzahl der gekreuzten Spuren anzupassen. Um dies zu verdeutlichen, sind in Fig. 18 bei einer als konstant fehlabgeglichen angenommenen Gewichtung Sprünge über zwei, drei und vier Spuren gezeigt. Die resultierende Integratorspannung PINT ist dabei abhängig von der Zahl der gekreuzten Spuren. Ziel ist auch hier, unabhängig von der Zahl der gekreuzten Spuren die focusoffsetabhängige Komponente im DFE-Signal möglichst auf Null zu reduzieren, wie dies oben für den Einzelspursprung beschrieben ist.

Vorteile der Erfindung sind einfache Realisierung und Ausgleich eventueller Änderungen der Eigenschaften des Geräts, insbesondere des optischen Abtasters sowie des Focusregelkreises infolge von Erwärmung oder anderer Einflüsse auch während des Betriebs.

## Patentansprüche

1. Verfahren zum Einstellen eines Gewichtungsfaktors in einem Gerät zum Lesen und/oder Beschreiben optischer Aufzeichnungsträger (7), welches ein Fokusfehlersignal (DFE) gemäß der differenziellen Focusfehlermethode erzeugt, aufweisend die Schritte:
- Einschalten des Fokusregelkreises und Erzeugen eines differenziellen Fokusfehlersignals (DFE),
- Auslösen eines Spurkreuzvorgangs,
- in Relation zueinander setzen von differenziellem Fokusfehlersignal (DFE) und einem Messsignal (CFE, DFE, DFO, OFE, RC),
- Ändern des Gewichtsfaktors in Abhängigkeit von dem in Relation gesetzten differenziellen Fokusfehlersignal.

2. Verfahren nach Anspruch 1 in einer Abtasteinheit für optische Aufzeichnungsträger (7) mit in Spuren (G, L) abgelegten Daten, wobei die Abtasteinheit eine Objektivlinse (6), die relativ zum Aufzeichnungsträger (7) verschiedene Abstände einnehmen kann, einen Focusregelkreis und einen Spurführungs-Regelkreis aufweist; einen optischen Hauptstrahl und zumindest einen Nebenstrahl erzeugt, die Haupt- und Nebenstrahlen auf den Aufzeichnungsträger (7) fokussiert, das vom Aufzeichnungsträger (7) reflektierte Licht mit mehreren den Strahlen zugeordneten Photodetektorsegmenten (A, B, C, D, E₁-E₄, F₁-F₄) auswertet, aus den Signalen der dem Hauptstrahl zugeordneten Photodetektorsegmente (A, B, C, D) ein erstes Fehlersignal (CFE) herleitet und aus den Signalen der den Nebenstrahlen zugeordneten Photodetektorsegmente (E₁-E₄, F₁-F₄) ein zweites Fehlersignal (OFE) herleitet, und wobei in dem Verfahren das Focusfehlersignal (DFE) durch Kombinieren des mit einem ersten Zweiggewicht (1+T, 1+F) multiplizierten ersten Fehlersignals (CFE) und des mit einem zweiten Zweiggewicht (T, F, 1-T, 1-F) multiplizierten zweiten Fehlersignals (OFE) gebildet wird; **gekennzeichnet durch** die Schritte:
- Auslösen eines Spurkreuzvorgangs;
- Messen von zwei Messsignalen (CFE, DFE, DFO, OFE, RC, ATON, GATE), die unterschiedlich gebildet werden und Aussagen über den Abstand der Objektivlinse (6) vom Aufzeichnungsträger (7) und über die radiale Lage der Strahlen relativ zu den Spuren (G, L) enthalten;
- Auswerten der Messsignale;
- Einstellen der Zweiggewichte (T, F) gesteuert **durch** das Ergebnis der Auswertung.

3. Verfahren nach Anspruch 2, wobei bei Beginn der Anwendung des Verfahrens der Spurführungs-Regelkreis eingeschaltet ist, während eines Steuerungsimpulses (ATON, GATE) ein Sprung über mindestens eine Spur (G, L) durchgeführt wird, das erste Messsignal aus dem Focusfehlersignal (DFE) gebildet wird, das zweite Messignal aus dem Steuerungsimpuls (ATON, GATE) oder aus einem differentiellen Focus-offset-Signal (DFO) gebildet wird, die Auswertung der Messsignale eine Integration des Produkts der beiden Messsignale zu einem Auswertesignal und danach dessen Vergleich mit einem Vergleichsintervall umfasst; und bei dem, wenn das Auswertesignal nicht im Vergleichsintervall liegt, die Zweiggewichte (T, F) in mindestens einem Einstellungsschritt so verändert werden, dass das Auswertesignal sich auf das Vergleichsintervall hin verändert.

4. Verfahren nach Anspruch 2, wobei der Spurführungs-Regelkreis ausgeschaltet ist.

5. Verfahren nach Anspruch 4, wobei die Objektivlinse (6) quer zu den Spuren (G, L) bewegt wird.

6. Verfahren nach Anspruch 4 oder 5, bei dem das erste Messsignal aus dem Focusfehlersignal (DFE) gebildet wird, das zweite Messsignal aus einem Signal gebildet wird, das auf der Mitte der Spuren (G, L) seine größten positiven oder negativen Amplituden hat, die Auswertung der Messsignale die Bildung eines Auswertesignals aus dem Produkt der beiden Messsignale und dessen Vergleich mit einem Vergleichsintervall umfasst, und bei dem, wenn das Auswertesignal nicht im Vergleichsintervall liegt, die Zweiggewichte (T, F) in mindestens einem Einstellungsschritt so verändert werden, dass das Auswertesignal sich auf das Vergleichsintervall hin verändert.

7. Verfahren nach Anspruch 6, bei dem das zweite Messsignal aus einem Mirrorsignal, einem Radialkontrastsignal (RC) oder einem differentiellen Focus-Offset-Signal (DFO) gebildet wird.

8. Verfahren nach Anspruch 6 oder 7, bei dem die Bildung des Auswertesignals eine Integration des Produkts der Messsignale umfasst, und eine Ablaufsteuerung vorhanden ist, die das Ergebnis der Integration vor jeder Messung auf Null zurücksetzt.

9. Verfahren nach Anspruch 4 oder 5, bei dem das erste Messsignal aus dem Focusfehlersignal (DFE) gebildet wird, das zweite Messsignal aus einem binärisierten differentiellen Focus-Offset-Signal (DFO) gebildet wird, die Auswertung der Messsignale die Bildung eines Auswertesignals aus dem Integral des Produkts der beiden Messsignale und den Vergleich des Auswertesignals mit einem Vergleichsintervall umfasst, und bei dem, wenn das Auswertesignal nicht im Vergleichsintervall liegt, die Zweiggewichte (T, F) in mindestens einem Einstellungsschritt so verändert werden, dass das Auswertesignal sich auf das Vergleichsintervall hin verändert.

10. Verfahren nach Anspruch 8 oder 9, bei dem die Integration über eine vorbestimmte Zeit oder über eine zur Abtastgeschwindigkeit proportionale Zeit erfolgt.

11. Verfahren nach einem der Ansprüche 3 oder 6 bis 10, bei dem die Änderung der Zweiggewichte stufenweise in kleinen Schritten oder durch Berechnung der jeweils neuen Zweiggewichte aus einem oder mehreren Stützwerten erfolgt.

12. Vorrichtung zur Durchführung eines der Verfahren nach Ansprüchen 1 bis 11.

## Claims

1. A method for adjusting a weighting factor in a device for reading from and/or writing to optical recording media (7) which generates a focus error signal (DFE) in accordance with the differential focus error method, having the steps of:
- switching on the focus control loop and generating a differential focus error signal (DFE),
- initiating a track crossing operation,
- setting differential focus error signal (DFE) and a measurement signal (CFE, DFE, DFO, OFE, RC) into relation with one another, and
- changing the weighting factor as a function of the differential focus error signal set into relation.

2. The method as claimed in claim 1 in a scanning unit for optical recording media (7) having data filed in tracks (G, L), wherein the scanning unit has an objective lens (6), which can adopt various distances relative to the recording medium (7), a focus control loop and a tracking control loop; generates an optical main beam and at least one secondary beam, focuses the main and secondary beams onto the recording medium (7), evaluates the light reflected by the recording medium (7) with the aid of several photodetector segments (A, B, C, D, E₁-E₄, F₁-F₄) assigned to the beams, derives a first error signal (CFE) from the signals of the photodetector segments (A, B, C, D) assigned to the main beam, and derives a second error signal (OFE) from the signals of the photodetector segments (E₁-E₄, F₁-F₄) assigned to the secondary beams, and wherein in the method the focus error signal (DFE) is formed by combining the first error signal (CFE), multiplied by a first branch weight (1+T, 1+F), and the second error signal (OFE), multiplied by a second branch weight (T, F, 1-T, 1-F);
defined by the steps of:
- initiating a track crossing operation;
- measuring two measurement signals (CFE, DFE, DFO, OFE, RC, ATON, GATE), that are differently formed and contain information relating to the distance of the objective lens (6) from the recording medium (7) and relating to the radial position of the beams relative to the tracks (G, L);
- evaluating the measurement signals; and
- adjusting the branch weight (T, F) in a fashion controlled by the result of the evaluation.

3. The method as claimed in claim 2, wherein at the start of the application of the method the tracking control loop is switched on, during a control pulse (ATON, GATE) a jump over at least one track (G, L) is carried out, the first measurement signal is formed from the focus error signal (DFE), the second measurement signal is formed from the control pulse (ATON, GATE) or from a differential focus offset signal (DFO), and the evaluation of the measurement signals comprises an integration of the product of the two measurement signals to form an evaluation signal and, thereafter, comparison of the latter with a comparison interval; and wherein, when the evaluation signal does not lie in the comparison interval, the branch weights (T, F) are varied in at least one adjustment step such that the evaluation signal changes toward the comparison interval.

4. The method as claimed in claim 2, wherein the tracking control loop is switched off.

5. The method as claimed in claim 4, wherein the objective lens (6) is moved transverse to the tracks (G, L).

6. The method as claimed in claim 4 or 5, in the case of which the first measurement signal is formed from the focus error signal (DFE), the second measurement signal is formed from a signal that has its greatest positive or negative amplitudes at the middle of the tracks (G, L), the evaluation of the measurement signals comprises forming an evaluation signal from the product of the two measurement signals and comparing it with a comparison interval, and in which, when the evaluation signal does not lie in the comparison interval, the branch weights (T, F) are varied in at least one adjustment step such that the evaluation signal changes toward the comparison interval.

7. The method as claimed in claim 6, in which the second measurement signal is formed from a mirror signal, a radial contrast signal (RC) or a differential focus offset signal (DFO).

8. The method as claimed in claim 6 or 7, in which the formation of the evaluation signal comprises an integration of the product of the measurement signals, and a sequence controller is present that resets the result of the integration to zero before each measurement.

9. The method as claimed in claim 4 or 5, in which the first measurement signal is formed from the focus error signal (DFE), the second measurement signal is formed from a binarized differential focus offset signal (DFO), the evaluation of the measurement signals comprises forming an evaluation signal from the integral of the product of the two measurement signals and comparing the evaluation signal with a comparison interval, and in which, when the evaluation signal does not lie in the comparison interval, the branch weights (T, F) are varied in at least one adjustment step such that the evaluation signal changes toward the comparison interval.

10. The method as claimed in claim 8 or 9, in which the integration is performed over a predetermined time or over a time proportional to the scanning speed.

11. The method as claimed in one of claims 3 or 6 to 10, in which the change in the branch weights is performed in a stepwise fashion in small steps or by calculating the respectively new branch weights from one or more interpolation values.

12. A device for carrying out one of the methods as claimed in claims 1 to 11.

## Revendications

1. Procédé pour ajuster un facteur de pondération dans un dispositif pour lire et/ou écrire sur un support d'enregistrement optique (7), lequel dispositif génère un signal d'erreur de mise au point (DFE) en fonction de la méthode d'erreur de mise au point différentielle, comportant les étapes de :
- mise sous tension du circuit de réglage de mise au point et génération d'un signal d'erreur de mise au point différentiel (DFE),
- déclenchement d'un processus de croisement de pistes,
- mise en relation du signal d'erreur de mise au point différentiel (DFE) et d'un signal de mesure (CFE, DFE, DFO, OFE, RC),
- modification du facteur de pondération en fonction du signal d'erreur de mise au point différentiel mis en relation.

2. Procédé selon la revendication 1 dans une unité de balayage pour supports d'enregistrement optiques (7) avec des données mémorisées sur des pistes (G, L), où l'unité de balayage possède une lentille d'objectif (6) pouvant adopter différents écarts en relation du support d'enregistrement (7), un circuit de réglage de mise au point et un circuit de réglage de suivi de piste ; génère un faisceau optique principal et au moins un faisceau secondaire, focalise les faisceaux principal et secondaire sur le support d'enregistrement (7), analyse la lumière réfléchie par le support d'enregistrement (7) avec plusieurs segments photodétectours (A, B, C, D, E₁-E₄, F₁-F₄) associés aux faisceaux, dérive un premier signal d'erreur (CFE) à partir des signaux des segments photodétecteurs (A, B, C, D) associés au faisceau principal et dérive un second signal d'erreur (OFE) à partir des signaux des segments photodétecteurs (E₁-E₄, F₁-F₄) associés aux faisceaux secondaires, et où dans le procédé, le signal d'erreur de mise au point (DFE) est généré par une combinaison du premier signal d'erreur (CFE) multiplié par un premier poids de branche (1+T, 1 +F) et du second signal d'erreur (OFE) multiplié par un second poids de branche (T, F, 1-T, 1-F) ; **caractérisé par** les étapes de :
- déclenchement d'un processus de croisement de pistes ;
- mesure de deux signaux de mesure (CFE, DFE, DFO, OFE, RC, ATON, GATE), lesquels sont générés de façon différente et contiennent une indication concernant l'écart entre la lentille d'objectif (6) et le support d'enregistrement (7) et concernant la position radiale des faisceaux par rapport aux pistes (G, L) ;
- analyse des signaux de mesure;
- ajustage des poids de branches (T, F), commandé via le résultat de l'analyse.

3. Procédé selon la revendication 2, où lors du début de l'utilisation du procédé, le circuit de réglage de suivi de piste est sous tension, lors d'une impulsion de commande (ATON, GATE), un saut est exécuté sur au moins une piste (G, L), le premier signal de mesure est généré à partir du signal d'erreur de mise au point (DFE), le second signal de mesure est généré à partir de l'impulsion de commande (ATON, GATE) ou à partir d'un signal de décalage de mise au point différentiel (DFO), l'analyse des signaux de mesure comprend une intégration du produit des deux signaux de mesure en un signal d'analyse, puis sa comparaison avec un intervalle de comparaison ; et dans lequel, lorsque le signal d'analyse ne se situe pas dans l'intervalle de comparaison, les poids de branches (T, F) sont modifiés lors d'au moins une étape d'ajustage, de telle manière que le signal d'analyse se situe dans l'intervalle de comparaison.

4. Procédé selon la revendication 2, où le circuit de réglage de suivi de piste est hors tension.

5. Procédé selon la revendication 4, où la lentille d'objectif (6) se déplace en travers par rapport aux pistes (G, L).

6. Procédé selon la revendication 4 ou 5, dans lequel le premier signal de mesure est généré à partir du signal d'erreur de piste (DFE), le second signal de mesure est généré à partir d'un signal possédant ses amplitudes positives ou négatives les plus importantes au milieu des pistes (G, L), l'analyse des signaux de mesure comprend la génération d'un signal de mesure à partir du produit des deux signaux de mesure et sa comparaison avec un intervalle de comparaison, et dans lequel, lorsque le signal d'analyse ne se situe pas dans l'intervalle de comparaison, les poids de branches (T, F) sont modifiés lors d'au moins une étape d'ajustage, de telle manière que le signal d'analyse se situe dans l'intervalle de comparaison.

7. Procédé selon la revendication 6, dans lequel le second signal de mesure est généré à partir d'un signal miroir, d'un signal de contraste radial (RC) ou d'un signal de décalage de mise au point différentiel (DFO),

8. Procédé selon la revendication 6 ou 7, dans lequel la génération du signal d'analyse comprend une intégration du produit des signaux de mesure, et une commande de processus est présente, laquelle redéfinit le résultat de l'intégration sur zéro avant chaque mesure.

9. Procédé selon la revendication 4 ou 5, dans lequel le premier signal de mesure est généré à partir du signal d'erreur de mise au point (DFE), le second signal de mesure est généré à partir d'un signal de décalage de mise au point (DFO) différentiel binarisé, où l'analyse des signaux de mesure comprend la génération d'un signal d'analyse à partir de l'intégral du produit des deux signaux de mesure et la comparaison du signal d'analyse avec un intervalle de comparaison, et dans lequel, lorsque le signal d'analyse ne se situe pas dans l'intervalle de comparaison, les poids de branches (T, F) sont modifiés lors d'au moins une étape d'ajustage, de telle manière que le signal d'analyse se situe dans l'intervalle de comparaison.

10. Procédé selon la revendication 8 ou 9, dans lequel l'intégration a lieu pendant une période prédéfinie ou pendant une période proportionnelle à la vitesse de balayage.

11. Procédé selon une des revendications 3 ou 6 à 10, dans lequel la modification des poids de branches a lieu par petites étapes ou via le calcul des nouveaux poids de branches à partir d'une ou de plusieurs valeurs de référence.

12. Dispositif pour l'exécution d'un des procédés selon les revendications 1 à 11.
